# EUROPÄISCHE PATENTSCHRIFT

(11) **EP 3 573 858 B1**
(45) Veröffentlichungstag und Bekanntmachung des Hinweises auf die Patenterteilung: **29.07.2020**
(21) Anmeldenummer: 18795589.3
(22) Anmeldetag: 30.10.2018
(51) Int. Cl.: B60N 2/20, B60N 2/24, B60N 2/30

(54) **SITZ UND NUTZFAHRZEUG**
SEAT AND UTILITY VEHICLE
SIÈGE ET VÉHICULE UTILITAIRE

(30) Priorität: 17.04.2018 DE 102018109130
(43) Veröffentlichungstag der Anmeldung: 04.12.2019
(73) Patentinhaber: Rheinmetall MAN Military Vehicles Österreich GesmbH, 1230 Wien (AT)
(72) Erfinder: ALLMANN, Christian, 1190 Wien (AT)
(74) Vertreter: Horn Kleimann Waitzhofer Patentanwälte PartG mbB
(86) Internationale Anmeldenummer: PCT/EP2018/079658
(87) Internationale Veröffentlichungsnummer: WO 2019/201462

(56) Entgegenhaltungen:
- EP-A2- 1 832 468
- DE-A1-102012 012 505
- DE-U1- 20 110 630

## Beschreibung

Die vorliegende Erfindung betrifft einen Sitz für ein Nutzfahrzeug und ein Nutzfahrzeug mit einem derartigen Sitz.

Bei Nutzfahrzeugen, insbesondere bei Lastkraftwagen, für militärische Anwendungen ist meist zwischen einem in einem Fahrerhaus angeordneten Fahrersitz und einem Beifahrersitz ein Mittelsitz vorgesehen. Der Mittelsitz soll dazu dienen, über eine an dem Fahrerhaus vorgesehene Dachluke eine auf oder an dem Dach montierte Waffe bedienen zu können. Hierzu ist es erforderlich, an dem Mittelsitz eine Trittfläche vorzusehen.

Die EP 1 832 468 A1 zeigt einen auf einer Oberseite gepolsterten Sitz, insbesondere eines Lastkraftwagens, wobei der Sitz über einen Schwenk-Drehmechanismus verfügt, mit dessen Hilfe der Sitz zwangsgeführt in eine mit der Oberseite nach unten weisende Position bringbar ist und mindestens einem weiteren Zusatznutzen zugänglich ist.

Die EP 3 002 541 A1 beschreibt einen Sitz für ein Fahrzeug mit einer Rückenlehne und einer Sitzfläche, wobei der Sitz ein klappbares Tablett umfasst, das in Bezug auf die Rückenlehne angelenkt ist, wobei das Tablett in einer in einer Aufnahme der Rückenlehne an einer Frontfläche der letzteren eingeklappten Position positioniert werden kann, die den Rücken eines auf dem Sitz sitzenden Benutzers aufnehmen soll, wobei der Sitz Armlehnen umfasst, auf denen das Tablett in einer auseinandergeklappten Position abgestützt wird.

Die DE 10 2012 012 505 A1 zeigt eine Sitzbank für ein Kraftfahrzeug. Die Sitzbank umfasst ein Gestell, das eine Stütze bildet, eine erste Sitzfläche und eine erste Rückenlehne, die auf dem Gestell montiert sind, wobei die erste Sitzfläche und/oder die erste Rückenlehne zwischen einer Benutzungsstellung und einer Nichtbenutzungsstellung verschiebbar sind, wobei das Gestell einen Stauraum unter der ersten Sitzfläche begrenzt, eine Klappe, die auf dem Gestell zwischen einer geschlossenen Stellung, in der der Stauraum verschlossen ist, und einer geöffneten Stellung, in der der Stauraum freigegeben ist, bewegbar montiert ist, und eine Sicherheitsvorrichtung, die ausgebildet ist, um die Verschiebung der Klappe aus ihrer geschlossenen Stellung in ihre geöffnete Stellung nur dann zu erlauben wenn die erste Sitzfläche oder die erste Rückenlehne in der Nichtbenutzungsstellung positioniert ist und wenn die zweite Sitzfläche oder die zweite Rückenlehne in der Nichtbenutzungsstellung positioniert ist.

Vor diesem Hintergrund besteht eine Aufgabe der vorliegenden Erfindung darin, einen verbesserten Sitz für ein Nutzfahrzeug zur Verfügung zu stellen.

Demgemäß wird ein Sitz für ein Nutzfahrzeug, insbesondere für ein militärisches Nutzfahrzeug, vorgeschlagen. Der Sitz umfasst einen Sitzsockel, ein Sitzelement, das eine Sitzfläche und eine erste Trittfläche aufweist, eine erste Schwenkeinrichtung zum Verschwenken des Sitzelements derart, dass das Sitzelement von einer Sitzposition, in der die erste Trittfläche dem Sitzsockel zugewandt ist, in eine erste Trittposition, in der die erste Trittfläche dem Sitzsockel abgewandt ist, verschwenkbar ist, eine Rückenlehne, die eine Rückenlehnensitzfläche und eine zweite Trittfläche aufweist, und eine zweite Schwenkeinrichtung zum Verschwenken der Rückenlehne derart, dass die Rückenlehne von einer Sitzposition, in der die Rückenlehnensitzfläche relativ zu dem Sitzsockel aufrecht positioniert ist, in eine zweite Trittposition, in der die zweite Trittfläche parallel zu der ersten Trittfläche angeordnet ist, verschwenkbar ist.

Dadurch, dass eine erste Trittfläche und eine zweite Trittfläche vorgesehen sind, können im Vergleich zu bekannten Sitzen für Nutzfahrzeuge zwei Stehhöhen verwirklicht werden, wobei die erste Trittfläche als Aufstiegshilfe zur zweiten Trittfläche dienen kann. Hierdurch werden zwei Stehniveaus verwirklicht, wodurch beispielweise Benutzer unterschiedlichster Körpergrößen den Sitz nutzen können oder der Benutzer je nach verwendeter Trittfläche weiter oder weniger weit aus einer Dachluke des Nutzfahrzeugs heraussehen kann.

Der Sitz ist vorzugsweise ein Mittelsitz. Das heißt, der Sitz kann zwischen einem Fahrersitz und einem Beifahrersitz des Nutzfahrzeugs angeordnet sein. Der Sitz ist insbesondere in einem Fahrerhaus des Nutzfahrzeugs vorgesehen. Der Sitzsockel kann auch als Sitzfuß bezeichnet werden. Der Sitzsockel weist vorzugsweise eine quaderförmige oder kastenförmige Geometrie auf und kann ein aus Stahlplatten gefertigtes Bauteil sein.

Vorzugsweise umfasst der Sitzsockel eine Vorderwand oder Vorderseite, eine beabstandet von der Vorderseite und parallel zu der Vorderseite angeordnete Rückwand oder Rückseite, zwei beabstandet voneinander und parallel zueinander angeordnete Seitenwände oder Seiten, eine Oberseite und eine Unterseite. Die Oberseite und die Unterseite können offen oder geschlossen sein. Vorzugsweise sind an den Seiten und der Rückseite zugewandt sich über die Oberseite hinaus erstreckende Sitzsockelwangen vorgesehen. Vorzugsweise ist das Sitzelement mit Hilfe der ersten Schwenkeinrichtung an den Sitzsockelwangen gelagert. Demgemäß ist auch die Rückenlehne mit Hilfe der zweiten Schwenkeinrichtung an den Sitzsockelwangen gelagert. Die Sitzsockelwangen sind im Bereich der Rückseite des Sitzsockels vorgesehen.

Die Sitzfläche und die erste Trittfläche des Sitzelements sind vorzugsweise an einander gegenüberliegenden Seiten des Sitzelements vorgesehen. Insbesondere ist die Sitzfläche vorderseitig an dem Sitzelement vorgesehen, und die erste Trittfläche ist rückseitig an dem Sitzelement vorgesehen. Die Sitzfläche kann aus Stoff, Kunstleder oder dergleichen gefertigt sein. Die Sitzfläche kann beispielsweise eine Polsterung, insbesondere in Form einer Schaumstoffpolsterung, aufweisen. Die Sitzfläche kann daher auch als Sitzpolster bezeichnet werden. Alternativ kann die Sitzfläche auch ohne eine derartige Polsterung ausgeführt sein. Beispielsweise kann die Sitzfläche in diesem Fall eine Sitzschale sein, die beispielsweise aus Holz oder einem Verbundmaterial, wie beispielsweise einem faserverstärkten Kunststoffmaterial, gefertigt ist.

Die erste Trittfläche ist vorzugweise aus einem Stahlblech oder Aluminiumblech gefertigt. Die erste Trittfläche kann auch als untere Trittfläche, erste Trittplatte, untere Trittplatte, erstes Trittblech oder unteres Trittblech bezeichnet werden. Alternativ zu einem Metallwerkstoff kann die erste Trittfläche auch aus einem Verbundmaterial, wie beispielsweise aus einem faserverstärkten Kunststoff oder dergleichen, gefertigt sein. Die erste Trittfläche ist trittsicher, rutschsicher oder rutschfest ausgebildet. Hierzu kann die erste Trittfläche eine Oberflächenstrukturierung aufweisen. Beispielsweise kann die erste Trittfläche ein Riffelblech sein.

In der Sitzposition des Sitzelements ist die erste Trittfläche dem Sitzsockel, insbesondere dessen Oberseite, zugewandt und die Sitzfläche ist dem Sitzsockel, insbesondere dessen Oberseite, abgewandt. Die Sitzposition des Sitzelements kann auch als erste Sitzposition oder Sitzelementsitzposition bezeichnet werden. In der ersten Trittposition des Sitzelements ist die erste Trittfläche dem Sitzsockel abgewandt und die Sitzfläche ist dem Sitzsockel zugewandt. Das Sitzelement kann sich auf der Oberseite des Sitzsockels abstützen. Alternativ kann zwischen der Oberseite des Sitzsockels und dem Sitzelement auch ein Abstützelement vorgesehen sein, auf dem sich das Sitzelement sowohl in der Sitzposition als auch in der ersten Trittposition abstützen kann. Das Abstützelement kann leistenförmig sein. Das Abstützelement kann daher auch als Abstützleiste bezeichnet werden. Es können auch zwei Abstützelemente vorgesehen sein. In diesem Fall kann dann jeder Seite des Sitzsockels ein Abstützelement zugeordnet sein.

Die zweite Trittfläche ist vorzugweise aus einem Stahlblech oder Aluminiumblech gefertigt. Die zweite Trittfläche kann auch als obere Trittfläche, zweite Trittplatte, obere Trittplatte, zweites Trittblech oder oberes Trittblech bezeichnet werden. Beispielsweise kann die zweite Trittfläche ein Riffelblech sein. Alternativ kann die zweite Trittfläche, wie die erste Trittfläche, aus einem Verbundmaterial, insbesondere aus einem faserverstärkten Kunststoff oder dergleichen, gefertigt sein. Auch die zweite Trittfläche ist trittsicher, rutschsicher oder rutschfest. Das heißt, auch die zweite Trittfläche kann eine Oberflächenstrukturierung aufweisen.

Die Rückenlehnensitzfläche und die zweite Trittfläche der Rückenlehne sind vorzugsweise auf einander gegenüberliegenden Seiten der Rückenlehne vorgesehen. Insbesondere ist die Rückenlehnensitzfläche vorderseitig an der Rückenlehne vorgesehen, und die zweite Trittfläche ist rückseitig an der Rückenlehne vorgesehen. Die Rückenlehnensitzfläche kann aus Stoff, Kunstleder oder dergleichen gefertigt sein. Die Rückenlehnensitzfläche kann, wie die Sitzfläche, eine Polsterung, insbesondere eine Schaumstoffpolsterung, aufweisen. Die Rückenlehnensitzfläche kann daher auch als Rückenlehnenpolster bezeichnet werden. Alternativ kann die Rückenlehnensitzfläche auch ohne eine derartige Polsterung ausgebildet sein. Beispielsweise kann die Rückenlehnensitzfläche in diesem Fall eine Rückenlehnensitzschale sein, die beispielsweise aus Holz oder einem Verbundmaterial, wie beispielsweise einem faserverstärkten Kunststoffmaterial, gefertigt ist. Die Sitzfläche und die Rückenlehnensitzfläche sind bevorzugt ergonomisch an den Benutzer angepasst. Das heißt, die Sitzfläche und die Rückenlehnensitzfläche können beliebig geformt, beispielsweise in Form einer Freiformfläche, sein.

Die Sitzposition der Rückenlehne kann auch als zweite Sitzposition oder Rückenlehnensitzposition bezeichnet werden. Dass die die Rückenlehnensitzfläche in der Sitzposition der Rückenlehne relativ zu dem Sitzsockel "aufrecht" positioniert ist, meint, dass die Rückenlehne beziehungsweise die Rückenlehnensitzfläche annähernd senkrecht zu dem Sitzsockel beziehungsweise zu dessen Oberseite orientiert ist. Vorzugsweise ist die Rückenlehne in Bezug auf die Sitzfläche in ihrer Sitzposition jedoch leicht zurück geneigt. Beispielsweise kann die zweite Trittfläche dann, wenn sich die Rückenlehne in ihrer Sitzposition befindet, in einem definierten Neigungswinkel zu der ersten Trittfläche beziehungsweise zu der Oberseite des Sitzsockels orientiert sein. Bevorzugt befindet sich dann auch das Sitzelement in seiner Sitzposition, so dass die erste Trittfläche dem Sitzsockel zugewandt ist. Der Neigungswinkel kann als Rückenlehnenneigungswinkel bezeichnet werden. Dieser Neigungswinkel beträgt bevorzugt 90° bis 110°, weiter bevorzugt 100° ± 5°, weiter bevorzugt 100° ± 3°, weiter bevorzugt 100° ± 1°, weiter bevorzugt genau 100°. Der Neigungswinkel α kann einstellbar sein.

Vorzugsweise sind die erste Trittfläche und die zweite Trittfläche dann, wenn sich das Sitzelement in der ersten Trittposition und die Rückenlehne in der zweiten Trittposition befindet, parallel zueinander und in einer Hochrichtung des Sitzes beabstandet voneinander angeordnet. Unter "parallel" ist vorliegend jedoch auch zu verstehen, dass die erste Trittfläche und die zweite Trittfläche auch leicht geneigt zueinander angeordnet sein können. Beispielsweise können die erste Trittfläche und die zweite Trittfläche in einem Neigungswinkel von 1° bis 20° zueinander geneigt sein.

Insbesondere spannen die erste Trittfläche und die zweite Trittfläche jeweils eine Ebene, insbesondere eine der ersten Trittfläche zugeordnete erste Ebene und eine der zweiten Trittfläche zugeordnete zweite Ebene, auf. Diese beiden Ebenen, die auch als Haupterstreckungsebenen der Trittflächen bezeichnet werden können, sind dann, wenn sich sowohl das Sitzelement als auch die Rückenlehne in der jeweiligen Trittposition befindet, wie zuvor erläutert, parallel zueinander orientiert. Für den Fall, dass sich sowohl das Sitzelement als auch die Rückenlehne in der jeweiligen Sitzposition befindet, sind die Ebenen in dem zuvor erläuterten Neigungswinkel relativ zueinander geneigt. Das heißt, in diesem Fall schneiden sich die Ebenen.

Bevorzugt ist die zweite Schwenkeinrichtung dazu eingerichtet, die Rückenlehne als Ganzes zu verschwenken. Insbesondere wird die Rückenlehne bei dem Verschwenken derselben von ihrer Sitzposition in die zweite Trittposition nach vorne umgeklappt oder nach vorne geklappt. Unter "nach vorne" ist vorliegend in Richtung auf das Sitzelement beziehungsweise auf den Sitzsockel hinzu zu verstehen. Bevorzugt wird die Rückenlehne bei dem Verschwenken derselben von ihrer Sitzposition in die zweite Trittposition um den zuvor erwähnten Neigungswinkel verschwenkt oder umgeklappt.

Gemäß einer Ausführungsform weist die erste Schwenkeinrichtung eine erste Drehachse, um die das Sitzelement drehbar gelagert ist, und eine zweite Drehachse, um die das Sitzelement drehbar gelagert ist, auf, wobei die erste Drehachse senkrecht zu der zweiten Drehachse orientiert ist.

Unter "senkrecht" ist vorliegend ein Winkel von bevorzugt 90° ± 10°, weiter bevorzugt von 90° ± 5°, weiter bevorzugt von 90° ± 1°, weiter bevorzugt von genau 90° zu verstehen. Die erste Schwenkeinrichtung kann auch als Verschwenkeinrichtung oder Schwenk- und Dreheinrichtung bezeichnet werden. Vorzugsweise sind an den Seiten beziehungsweise an den Sitzsockelwangen des Sitzsockels mehrere Lagerstellen vorgesehen. Dabei ist der ersten Drehachse eine erste Welle der ersten Schwenkeinrichtung zugeordnet, die an den entsprechenden Lagerstellen des Sitzsockels drehbar gelagert ist. Hierzu können Wälzlager oder Gleitlager vorgesehen sein. Alternativ kann die erste Achse auch an den Lagerstellen drehfest gelagert sein und das Sitzelement ist entsprechend drehbar um die Welle gelagert. Der zweiten Drehachse ist vorzugsweise eine zweite Welle der ersten Schwenkeinrichtung zugeordnet. Das heißt, die erste Welle ist senkrecht zu der zweiten Welle orientiert. Die erste Welle ist bevorzugt rotationssymmetrisch zu der ersten Drehachse aufgebaut, und die zweite Welle ist bevorzugt rotationssymmetrisch zu der zweiten Drehachse aufgebaut.

Gemäß einer weiteren Ausführungsform schneidet die erste Drehachse die zweite Drehachse.

Das heißt, die erste Drehachse und die zweite Drehachse spannen eine gemeinsame Ebene auf. Die erste Drehachse ist dabei bevorzugt parallel zu einer Breitenrichtung des Sitzes orientiert, und die zweite Drehachse ist bevorzugt parallel zu einer Tiefenrichtung des Sitzes orientiert.

Gemäß einer weiteren Ausführungsform ist das Sitzelement zum Verschwenken desselben von der Sitzposition in die erste Trittposition mit Hilfe der ersten Schwenkeinrichtung zuerst um einen ersten Verschwenkwinkel um die erste Drehachse verschwenkbar, wobei das Sitzelement nach dem Verschwenken um die erste Drehachse um einen zweiten Verschwenkwinkel um die zweite Drehachse verschwenkbar ist.

Das heißt, zum Verschwenken des Sitzelements von der Sitzposition in die erste Trittposition wird das Sitzelement in zwei Schritten zunächst um die erste Drehachse und anschließend um die zweite Drehachse verschwenkt. Das heißt, zunächst wird das Sitzelement von dem Sitzsockel abgehoben und um die erste Drehachse verschwenkt. Anschließend wird das um den ersten Verschwenkwinkel verschwenkte Sitzelement nun noch um den zweiten Verschwenkwinkel um die zweite Drehachse verschwenkt. Anschließend wird das Sitzelement wieder um die erste Drehachse zurück verschwenkt und auf dem Sitzsockel abgelegt. Dabei kann das Sitzelement sowohl in der Sitzposition als auch in der ersten Trittposition mit dem Sitzsockel verriegelt oder verrastet werden. Hierzu kann eine Verriegelungseinrichtung vorgesehen sein.

Gemäß einer weiteren Ausführungsform ist der zweite Verschwenkwinkel größer als der erste Verschwenkwinkel.

Der zweite Verschwenkwinkel beträgt bevorzugt 180°. Der erste Verschwenkwinkel kann beispielsweise 30° bis 60°, bevorzugt 45°, betragen. Das heißt, das Sitzelement wird bei dem Verschwenken um die zweite Drehachse um 180° verdreht so dass entweder die Sitzfläche oder die erste Trittfläche dem Sitzsockel zugewandt ist.

Gemäß einer weiteren Ausführungsform ist das Sitzelement an einer Rückseite des Sitzsockels um die erste Drehachse drehbar gelagert.

Insbesondere ist das Sitzelement im Bereich der Rückseite um die erste Drehachse drehbar gelagert. Vorzugsweise sind an der Rückseite des Sitzsockels die Sitzsockelwangen vorgesehen, die mit den Seiten des Sitzsockels verbunden sind oder einteilig mit den Seiten ausgebildet sind. Das Sitzelement ist somit mit Hilfe der zuvor erwähnten ersten Welle, die an der Rückseite des Sitzsockels, insbesondere an den Sitzsockelwangen, gelagert ist, um die erste Drehachse drehbar an dem Sitzsockel gelagert.

Gemäß einer weiteren Ausführungsform weist die erste Schwenkeinrichtung ein Kopplungselement auf, das um die erste Drehachse drehbar an dem Sitzsockel gelagert ist, wobei das Sitzelement um die zweite Drehachse drehbar an dem Kopplungselement gelagert ist.

Vorzugsweise ist die zuvor erwähnte erste Welle der Schwenkeinrichtung in dem Kopplungselement aufgenommen. Dabei kann entweder die erste Welle drehbar in oder an dem Kopplungselement gelagert sein oder die erste Welle ist drehfest mit dem Kopplungselement verbunden und mit Hilfe der zuvor erwähnten Lagerstellen drehbar an dem Sitzsockel beziehungsweise an den Sitzsockelwangen gelagert. Zum Lagern des Sitzelements an dem Kopplungselement ist die zuvor erwähnte zweite Welle der ersten Schwenkeinrichtung vorgesehen. Die zweite Welle kann drehbar in oder an dem Kopplungselement oder drehbar in oder an dem Sitzelement gelagert sein. Hierzu können Wälzlager oder Gleitlager vorgesehen sein.

Gemäß einer weiteren Ausführungsform ist das Sitzelement entlang der zweiten Drehachse linear verschiebbar, um das Sitzelement von einer unverschobenen Position in eine verschobene Position und umgekehrt zu verbringen.

Die unverschobene Position kann auch als eingeschobene Position und die verschobene Position kann auch als ausgezogene Position bezeichnet werden. Insbesondere ist das Sitzelement entlang der zweiten Welle linear verschiebbar. Hierzu kann eine Linearführung vorgesehen sein. Dadurch, dass das Sitzelement von der unverschobenen Position in die verschobene Position verbringbar ist, kann das Sitzelement zum Verschwenken um die zweite Drehachse von dem Sitzsockel weg verlagert werden. Hierdurch wird ein Anstoßen des Sitzelements an dem Sitzsockel oder an der Rückenlehne bei dem Verschwenken desselben um die zweite Drehachse zuverlässig verhindert.

Gemäß einer weiteren Ausführungsform ist das Sitzelement in Richtung der unverschobenen Position federvorgespannt.

Hierdurch verlagert sich das Sitzelement dann, wenn keine in die verschobene Position orientierte Kraft mehr auf dasselbe aufgebracht wird, selbsttätig zurück in die unverschobene Position. Dies vereinfacht die Handhabung des Sitzes. Insbesondere kann der Sitz hierdurch auch einhändig bedient werden.

Gemäß einer weiteren Ausführungsform weist die erste Schwenkeinrichtung zum Verbringen des Sitzelements von der unverschobenen Position in die verschobene Position und umgekehrt eine Teleskopwellenanordnung mit einer Welle und einem Federelement auf.

Die Teleskopwellenanordnung bildet die zuvor erwähnte Linearführung des Sitzelements. Die Welle der Teleskopwellenanordnung entspricht der zuvor erwähnten zweiten Welle der ersten Schwenkeinrichtung. Das Federelement ist vorzugsweise eine Zylinderfeder, insbesondere eine Schraubenfeder, oder eine Gasdruckfeder. Das Federelement ist bevorzugt eine Druckfeder, die das Sitzelement in Richtung der unverschobenen Position federvorspannt. Das Federelement kann dabei in dem Sitzelement oder in dem zuvor erwähnten Kopplungselement aufgenommen sein. Vorzugsweise ist die Welle innerhalb des Federelements angeordnet. Hierdurch kann ein besonders kompakter Aufbau der Teleskopwellenanordnung erreicht werden. Die Teleskopwellenanordnung kann ferner eine Hohlwelle oder Hülse aufweisen, die in dem Sitzelement angeordnet ist. In der Hülse wiederum sind insbesondere das Federelement und die zweite Welle aufgenommen.

Gemäß einer weiteren Ausführungsform weist die zweite Schwenkeinrichtung eine dritte Drehachse auf, um die die Rückenlehne drehbar gelagert ist, wobei die dritte Drehachse parallel zu der ersten Drehachse und senkrecht zu der zweiten Drehachse orientiert ist.

Vorzugsweise ist die dritte Drehachse in der Hochrichtung und in der Tiefenrichtung des Sitzes beabstandet von der ersten Drehachse und parallel zu dieser angeordnet. Der dritten Drehachse ist vorzugsweise eine dritte Welle zugeordnet, die mit Hilfe der zuvor erwähnten Lagerstellen an dem Sitzsockel beziehungsweise an den Sitzsockelwangen des Sitzsockels gelagert ist. Dabei kann die dritte Welle drehbar an dem Sitzsockel gelagert sein und drehfest mit der Rückenlehne verbunden sein, oder die dritte Welle ist drehfest mit dem Sitzsockel verbunden und die Rückenlehne ist um die dritte Welle drehbar gelagert. Hierzu können Wälzlager oder Gleitlager vorgesehen sein.

Gemäß einer weiteren Ausführungsform umfasst der Sitz eine Arretiereinrichtung zum Arretieren der Rückenlehne sowohl in der Sitzposition als auch in der zweiten Trittposition.

Die Arretiereinrichtung ist dazu eingerichtet, die Rückenlehne formschlüssig zu arretieren. Eine formschlüssige Verbindung entsteht durch das Ineinander- oder Hintergreifen von mindestens zwei Verbindungspartnern. Die Arretiereinrichtung weist vorzugsweise die an dem Sitzsockel beziehungsweise an den Sitzsockelwangen vorgesehenen Lagerstellen in Form von Bohrungen sowie zumindest ein an der Rückenlehne vorgesehenes Arretierelement auf. Vorzugsweise sind zwei Arretierelemente vorgesehen, die an einander gegenüberliegenden Seiten der Rückenlehne positioniert sind. Die Arretierelemente können beispielsweise federvorgespannte Bolzen, insbesondere sogenannte Kugelsperrbolzen, sein. Umgekehrt können auch an den Sitzsockelwangen, insbesondere an den Lagerstellen, derartige Arretierelemente vorgesehen sein, die dazu eingerichtet sind, in entsprechende Ausnehmungen der Rückenlehne einzurasten oder einzugreifen. Zum Verbringen der Rückenlehne von der Sitzposition derselben in die zweite Trittposition wird die Arretiereinrichtung entriegelt und die Rückenlehne um die dritte Drehachse verschwenkt. Sobald sich die Rückenlehne in der zweiten Trittposition befindet, arretiert die Arretiereinrichtung die Rückenlehne selbsttätig. Umgekehrt verriegelt die Arretiereinrichtung die Rückenlehne auch bei einem Verschwenken derselben von der zweiten Trittposition in die Sitzposition wieder selbsttätig.

Gemäß einer weiteren Ausführungsform weist die Rückenlehne einen Abstützbügel auf, der sich in der zweiten Trittposition auf dem Sitzsockel oder auf der ersten Trittfläche abstützt.

Hierdurch kann die zweite Trittfläche mit einer besonders hohen Gewichtskraft belastet werden. Der Abstützbügel ist optional. Der Abstützbügel ist vorzugsweise rückseitig an der Rückenlehne, das heißt, an der zweiten Trittfläche, um eine vierte Drehachse drehbar gelagert.

Gemäß einer weiteren Ausführungsform weist das Sitzelement Stützabschnitte auf, die sich in der ersten Trittposition auf dem Sitzsockel abstützen.

Hierdurch wird vermieden, dass sich die Sitzfläche in der ersten Trittposition direkt auf dem Sitzsockel abstützt. Dadurch kann ein besonders sicherer Stand erzielt werden, wenn sich das Sitzelement in der ersten Trittposition befindet, da ein Verformen der möglicherweise gepolsterten Sitzfläche verhindert wird. Bevorzugt stützen sich die Stützabschnitte auf dem zuvor erwähnten Abstützelement ab.

Ferner wird ein Nutzfahrzeug, insbesondere ein militärisches Nutzfahrzeug, mit zumindest einem derartigen Sitz vorgeschlagen.

Das Nutzfahrzeug kann auch mehrere derartige Sitze umfassen. Wie zuvor erwähnt, umfasst das Nutzfahrzeug ein Fahrerhaus, in dem der Sitz angeordnet ist. Vorzugsweise ist der Sitz ein Mittelsitz, der zwischen dem Fahrersitz und dem Beifahrersitz angeordnet ist. Das Nutzfahrzeug umfasst vorzugsweise eine an oder auf einem Dach des Fahrerhauses montierte Waffe, die über eine an dem Dach vorgesehene Dachluke bedienbar ist. Das Fahrerhaus kann geschützt sein. Das heißt, das Fahrerhaus kann gegen Beschuss, Sprengfallen, Unkonventionelle Spreng- oder Brandvorrichtung (USBV), Minen oder dergleichen geschützt sein. Vorzugsweise ist der Sitz an einem Boden des Fahrerhauses montiert. Alternativ kann der Sitz auch an dem Dach des Fahrerhauses aufgehängt sein. Das Nutzfahrzeug ist bevorzugt ein Radfahrzeug. Bevorzugt weist das Nutzfahrzeug Allradantrieb auf. Das Nutzfahrzeug kann ein militärisch genutzter Lastkraftwagen sein.

Weitere mögliche Implementierungen des Sitzes und/oder des Nutzfahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Sitzes und/oder des Nutzfahrzeugs hinzufügen.

Weitere vorteilhafte Ausgestaltungen und Aspekte des Sitzes und/oder des Nutzfahrzeugs sind Gegenstand der Unteransprüche sowie der im Folgenden beschriebenen Ausführungsbeispiele des Sitzes und/oder des Nutzfahrzeugs. Im Weiteren werden der Sitz und/oder das Nutzfahrzeug anhand von bevorzugten Ausführungsformen unter Bezugnahme auf die beigelegten Figuren näher erläutert.
- Fig. 1: zeigt eine schematische Ansicht einer Ausführungsform eines Nutzfahrzeugs;
- Fig. 2: zeigt eine Seitenansicht einer Ausführungsform eines Sitzes für das Nutzfahrzeug gemäß Fig. 1;
- Fig. 3: zeigt eine Vorderansicht des Sitzes gemäß Fig. 2;
- Fig. 4: zeigt eine schematische Ansicht einer Ausführungsform einer Schwenkeinrichtung für den Sitz gemäß Fig. 2;
- Fig. 5: zeigt eine weitere schematische Seitenansicht des Sitzes gemäß Fig. 2;
- Fig. 6: zeigt eine weitere schematische Seitenansicht des Sitzes gemäß Fig. 2; und
- Fig. 7: zeigt eine weitere schematische Seitenansicht des Sitzes gemäß Fig. 2.

In den Figuren sind gleiche oder funktionsgleiche Elemente mit denselben Bezugszeichen versehen worden, sofern nichts anderes angegeben ist. Verdeckte Bauteile sind in den Figuren mit gestrichelten Linien dargestellt.

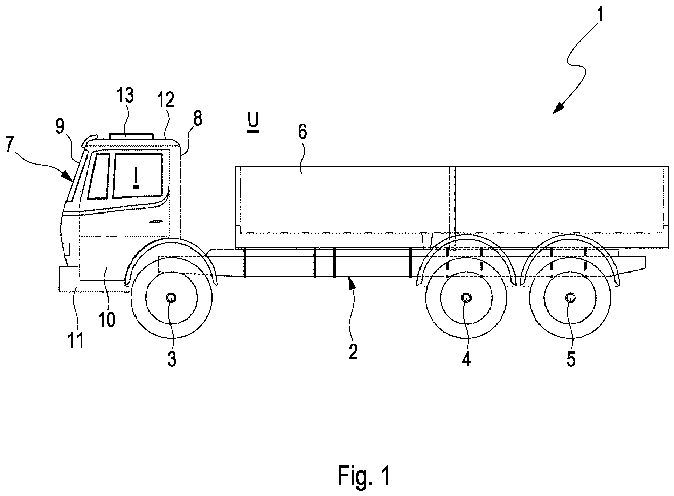

Die Fig. 1 zeigt eine schematische Seitenansicht einer Ausführungsform eines Nutzfahrzeugs 1. Das Nutzfahrzeug 1 ist insbesondere ein militärisches Nutzfahrzeug. Das Nutzfahrzeug 1 kann, wie in der Fig. 1 gezeigt, ein Lastkraftwagen sein. Insbesondere ist das Nutzfahrzeug 1 ein geländegängiger Lastkraftwagen. Das Nutzfahrzeug 1 kann ein geschütztes Fahrzeug sein. Das Nutzfahrzeug 1 umfasst ein Fahrgestell 2 mit einer Vielzahl an Achsen 3 bis 5. Beispielsweise können drei derartige Achsen 3 bis 5 vorgesehen sein. Das heißt, das Nutzfahrzeug 1 ist ein Dreiachser. Das Nutzfahrzeug 1 umfasst bevorzugt einen Allradantrieb. Das heißt, alle Achsen 3 bis 5 sind angetrieben. Alternativ kann das Nutzfahrzeug 1 auch beliebig viele Achsen 3 bis 5 aufweisen. Das Nutzfahrzeug 1 kann, wie in der Fig. 1 gezeigt, ein Radfahrzeug sein. Alternativ kann das Nutzfahrzeug 1 auch ein Kettenfahrzeug sein.

Das Nutzfahrzeug 1 umfasst weiterhin einen von dem Fahrgestell 2 getragenen Aufbau 6. Der Aufbau 6 kann beispielsweise eine Pritsche, einen Container, einen Koffer, einen Tank oder dergleichen umfassen. Weiterhin umfasst das Nutzfahrzeug 1 ein Fahrerhaus 7. Das Fahrerhaus 7 ist vorzugsweise gegen Beschuss, Sprengfallen, Unkonventionelle Spreng- oder Brandvorrichtung (USBV), Minen und dergleichen geschützt. Das Fahrerhaus 7 umfasst eine dem Aufbau 6 zugewandte Rückseite 8, eine dem Aufbau 6 abgewandte Vorderseite 9, zwei seitlich angeordnete Türen 10, einen Boden 11 und ein Dach 12.

Auf oder an dem Dach 12 kann eine nicht gezeigte Waffe montiert sein. An dem Dach 12 ist eine Dachluke 13 vorgesehen. Die Dachluke 13 kann geöffnet und geschlossen werden. Beispielsweise kann die Dachluke 13 hierzu mit Hilfe eines Schwenkmechanismus verschwenkt werden. Über die geöffnete Dachluke 13 kann ein Innenraum I des Fahrerhauses 7 von einer Umgebung U des Nutzfahrzeugs 1 aus betreten und wieder verlassen werden. Insbesondere kann die Dachluke 13 dann geöffnet werden, wenn die auf oder an dem Dach 12 montierte Waffe zu bedienen ist.

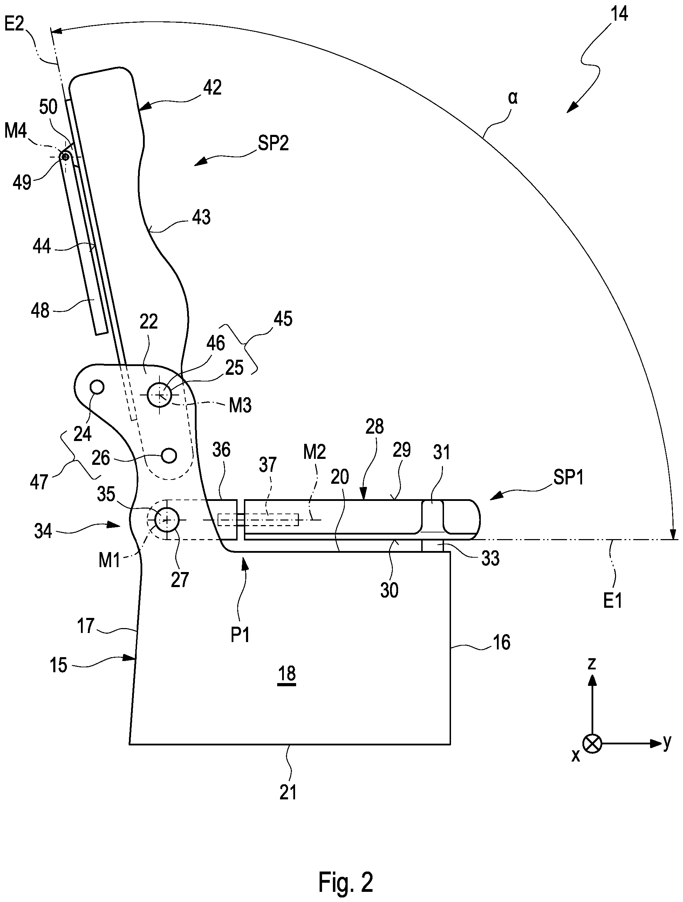

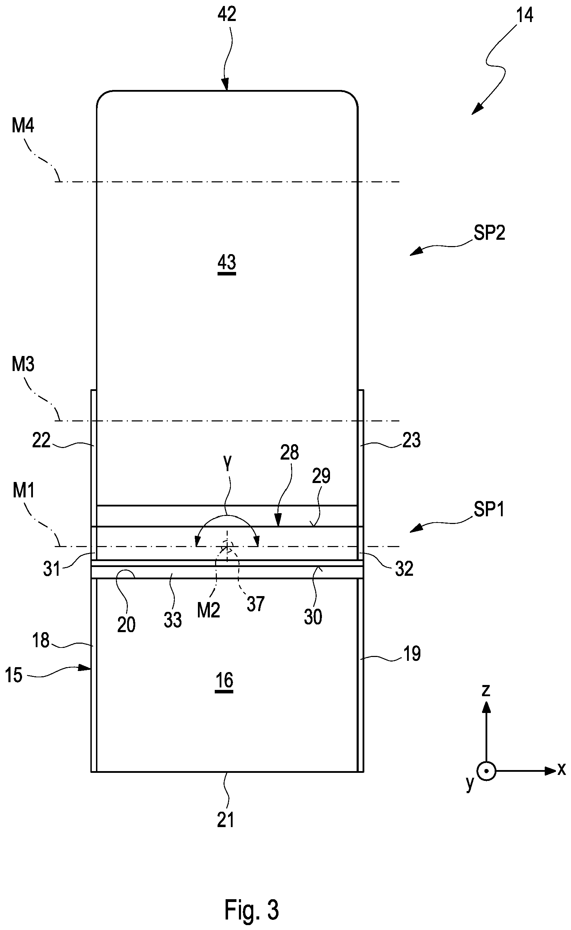

Die Fig. 2 zeigt eine schematische Seitenansicht, und die Fig. 3 zeigt eine schematische Vorderansicht einer Ausführungsform eines Sitzes 14 für das Nutzfahrzeug 1. Vorzugsweise ist der Sitz 14 innerhalb des Fahrerhauses 7 und mittig in diesem angeordnet. Das heißt, der Sitz 14 ist unterhalb der Dachluke 13 angeordnet. Der Sitz 14 kann zwischen einem Fahrersitz und einem Beifahrersitz des Nutzfahrzeugs 1 angeordnet sein. Der Sitz 14 kann auch als Mittelsitz bezeichnet werden. Der Sitz 14 kann an dem Boden 11 des Fahrerhauses 7 montiert sein. Alternativ kann der Sitz 14 auch an dem Dach 12 des Fahrerhauses 7 aufgehängt sein.

Der Sitz 14 umfasst einen Sitzfuß oder Sitzsockel 15, der, wie zuvor erwähnt, mit dem Boden 11 oder dem Dach 12 des Fahrerhauses 7 gekoppelt sein kann. Der Sitzsockel 15 umfasst eine Vorderwand oder Vorderseite 16 sowie eine beabstandet zu der Vorderseite 16 und parallel zu der Vorderseite 16 angeordnete Rückwand oder Rückseite 17. Weiterhin weist der Sitzsockel 15 zwei parallel zueinander und beabstandet voneinander angeordnete Seitenwände oder Seiten 18, 19 auf. Ferner umfasst der Sitzsockel 15 eine Oberseite 20 und eine parallel zu der Oberseite 20 und beabstandet von dieser angeordnete Unterseite 21. Der Sitzsockel 15 ist so im Wesentlichen quaderförmig oder kastenförmig. Der Sitzsockel 15 kann nach oben, das heißt, an der Oberseite 20, offen oder geschlossen sein. Auch die Unterseite 21 kann offen oder geschlossen sein.

Der Sitzsockel 15 weist weiterhin zwei an der Rückseite 17 vorgesehene und sich über die Oberseite 20 hinaus erstreckende Sitzsockelwangen 22, 23 auf. Die Sitzsockelwangen 22, 23 können einteilig, insbesondere materialeinstückig, mit den Seiten 18, 19 ausgebildet sein. Unter "einteilig" ist vorliegend zu verstehen, dass die Sitzsockelwangen 22, 23 und die jeweilige Seite 18, 19 jeweils ein gemeinsames einteiliges Bauteil bilden. Unter "materialeinstückig" ist vorliegend zu verstehen, dass die Sitzsockelwangen 22, 23 und die jeweilige Seite 18, 19 jeweils durchgehend aus demselben Material gefertigt sind.

Beispielsweise können die Seiten 18, 19 mit der jeweiligen Sitzsockelwange 22, 23 als Stahlplatten ausgebildet sein. Der gesamte Sitzsockel 15 kann eine Schweißkonstruktion sein. Jede Sitzsockelwange 22, 23 weist mehrere Lagerstellen 24 bis 27 auf. Die Lagerstellen 24 bis 27 können beispielsweise als Durchbrüche in der jeweiligen Sitzsockelwange 22, 23 vorgesehen sein. Insbesondere können die Lagerstellen 24 bis 27 in den Sitzsockelwangen 22, 23 vorgesehene kreisrunde Bohrungen sein. Die Lagerstellen 24 bis 27 können Wälzlager oder Gleitlager umfassen.

Der Sitz 14 umfasst weiterhin ein Sitzelement 28. Das Sitzelement 28 umfasst vorderseitig eine Sitzfläche 29 und rückseitig, das heißt, der Sitzfläche 29 abgewandt, eine erste Trittfläche 30. Die erste Trittfläche 30 kann auch als untere Trittfläche bezeichnet werden. Die erste Trittfläche 30 kann darüber hinaus auch als erste Trittplatte, untere Trittplatte, erstes Trittblech oder unteres Trittblech bezeichnet werden. Die Sitzfläche 29 kann ein Sitzpolster sein oder als solches bezeichnet werden. Die Sitzfläche 29 kann aus Stoff, Kunstleder oder dergleichen gefertigt sein. Die Sitzfläche 29 kann, beispielsweise mit Hilfe eines Schaumstoffmaterials, gepolstert sein. Die Sitzfläche 29 kann auch ohne eine derartige Polsterung ausgebildet sein. Beispielsweise kann die Sitzfläche 29 in diesem Fall eine Sitzschale sein, die beispielsweise aus Holz oder einem Verbundmaterial, wie beispielsweise einem faserverstärkten Kunststoffmaterial, gefertigt ist.

Die erste Trittfläche 30 kann beispielsweise aus einem Stahlblech oder aus einem Aluminiumblech gefertigt sein. Die erste Trittfläche 30 ist trittsicher oder rutschsicher. Beispielsweise kann die erste Trittfläche 30 ein strukturiertes Stahlblech oder ein strukturiertes Aluminiumblech sein. Insbesondere kann die erste Trittfläche 30 ein Riffelblech sein. Alternativ kann die erste Trittfläche 30 auch aus einem Kunststoffmaterial oder einem Verbundmaterial, wie beispielsweise einem faserverstärkten Kunststoffmaterial, gefertigt sein. Auch in diesem Fall kann die erste Trittfläche 30 eine Oberflächenstrukturierung aufweisen. Die erste Trittfläche 30 spannt eine erste Ebene E1 auf. Die erste Ebene E1 kann auch als Haupterstreckungsebene der ersten Trittfläche 30 bezeichnet werden.

Die erste Trittfläche 30 umfasst weiterhin zwei Stützabschnitte 31, 32, die beispielsweise als an der ersten Trittfläche 30 vorgesehene Abkantungen ausgebildet sind, die seitlich an der Sitzfläche 29 vorbeilaufen. Die Stützabschnitte 31, 32 sind dazu eingerichtet, sich auf der Oberseite 20 des Sitzsockels 15 oder auf einem an der Oberseite 20 vorgesehenen Abstützelement 33 abzustützen. Das Abstützelement 33 kann leistenförmig sein. Das Abstützelement 33 kann daher auch als Abstützleiste bezeichnet werden. Das Abstützelement 33 kann sich zwischen den Seiten 18, 19 erstrecken und beispielsweise mit diesen verschweißt sein. Das Abstützelement 33 ist optional. Alternativ können auch zwei Abstützelemente 33 vorgesehen sein. In diesem Fall kann dann jeder Seite 18, 19 des Sitzsockels 15 ein Abstützelement 33 zugeordnet sein.

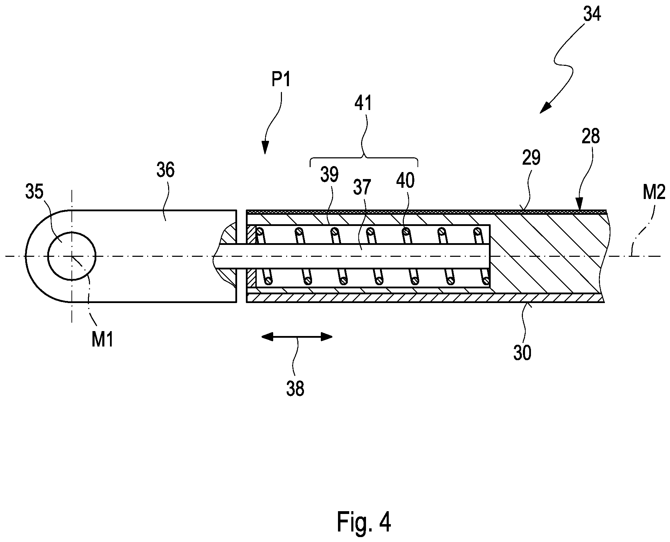

Ferner umfasst der Sitz 14 eine erste Schwenkeinrichtung 34 (Fig. 4) zum Verschwenken des Sitzelements 28. Die erste Schwenkeinrichtung 34 kann auch als erste Verschwenkeinrichtung oder als Schwenk- und Dreheinrichtung bezeichnet werden. Die erste Schwenkeinrichtung 34 umfasst eine erste Welle 35, die in den Lagerstellen 27 der Sitzsockelwangen 22, 23 um eine erste Drehachse M1 drehbar an dem Sitzsockel 15 gelagert ist. Weiterhin umfasst die erste Schwenkeinrichtung 34 ein Kopplungselement 36, das das Sitzelement 28 mit der ersten Welle 35 koppelt. Das Kopplungselement 36 erstreckt sich leistenförmig zwischen den Seiten 18, 19 beziehungsweise zwischen den Sitzsockelwangen 22, 23.

Die erste Welle 35 kann drehbar in den Lagerstellen 27 der Sitzsockelwangen 22, 23 gelagert sein. In diesem Fall können die Lagerstellen 27 beispielsweise Wälzlager oder Gleitlager umfassen. Alternativ kann die erste Welle 35 an den Lagerstellen 27 drehfest gelagert sein und das Kopplungselement 36 kann sich um die erste Drehachse M1 herum um die erste Welle 35 drehen. In diesem Fall kann die erste Welle 35 in dem Kopplungselement 36 wälzgelagert oder gleitgelagert sein.

Die erste Schwenkeinrichtung 34 umfasst weiterhin eine in dem Kopplungselement 36 gelagerte zweite Welle 37, um die das Sitzelement 28 um eine zweite Drehachse M2 drehbar gelagert ist. Dabei kann die zweite Welle 37 entweder drehbar in dem Sitzelement 28 gelagert sein oder die zweite Welle 37 ist drehbar in dem Kopplungselement 36 gelagert. Hierzu können Wälzlager oder Gleitlager vorgesehen sein. Die erste Drehachse M1 und die zweite Drehachse M2 beziehungsweise die erste Welle 35 und die zweite Welle 37 sind dabei senkrecht zueinander positioniert. Unter "senkrecht" ist vorliegend ein Winkel von bevorzugt 90° ± 10°, weiter bevorzugt von 90° ± 5°, weiter bevorzugt von 90° ± 1°, weiter bevorzugt von genau 90° zu verstehen. Dabei schneidet die erste Drehachse M1 die zweite Drehachse M2.

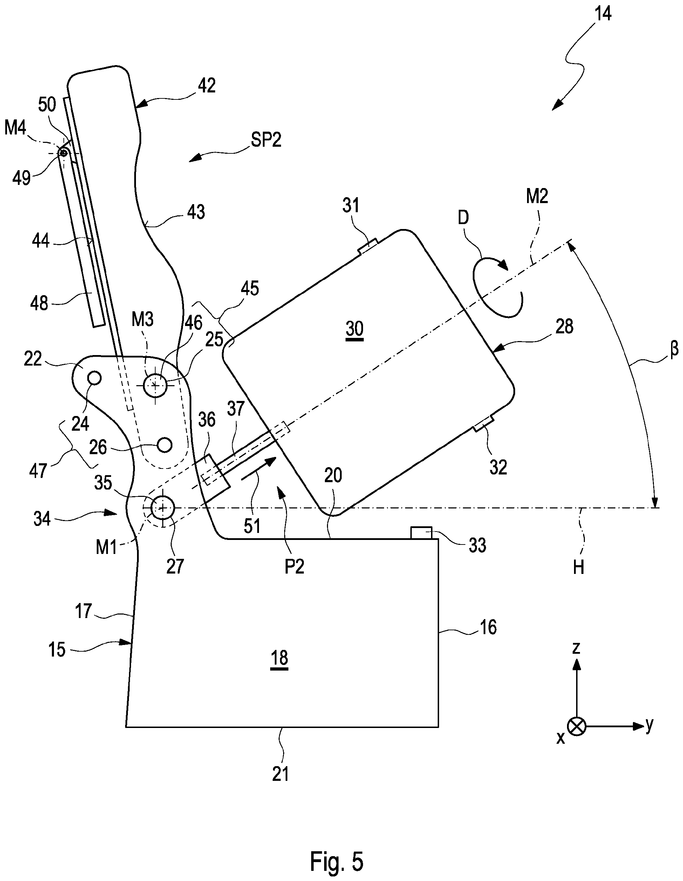

Das Sitzelement 28 ist entlang der zweiten Drehachse M2 beziehungsweise entlang der zweiten Welle 37 linear verschiebbar. Diese lineare Verschiebbarkeit ist in der Fig. 4 mit einem Doppelpfeil 38 angedeutet. Dabei kann das Sitzelement 28 von einer in den Fig. 2 bis 4, 6 und 7 gezeigten eingeschobenen oder unverschobenen Position P1 in eine ausgezogene oder verschobene Position P2 (Fig. 5) und umgekehrt verbracht werden. Zum Verbringen des Sitzelements 28 von der unverschobenen Position P1 in die verschobene Position P2 und umgekehrt kann entweder das Sitzelement 28 linear gegenüber der zweiten Welle 37 bewegt werden, oder die zweite Welle 37 wird mitsamt dem Sitzelement 28 linear gegenüber dem Kopplungselement 36 bewegt. Hierzu kann eine Linearführung vorgesehen sein.

Bei der beispielhaften Ausführungsform der ersten Schwenkeinrichtung 34 gemäß der Fig. 4 kann das Sitzelement 28 gegenüber der zweiten Welle 37 linear verschoben werden. Beispielsweise kann in dem Sitzelement 28 eine optionale Hohlwelle oder Hülse 39 vorgesehen sein, in der die zweite Welle 37 verschiebbar aufgenommen ist. Das Sitzelement 28 ist dabei in Richtung der unverschobenen Position P1 federvorgespannt. Das heißt, das Sitzelement 28 verbringt sich selbsttätig von der verschobenen Position P2 in die unverschobene Position P1 und kann gegen die Federvorspannung von der unverschobenen Position P1 in die verschobene Position P2 verbracht werden.

Hierzu umfasst die erste Schwenkeinrichtung 34 ein Federelement 40. Das Federelement 40 kann entweder, wie in der Fig. 4 gezeigt, innerhalb des Sitzelements 28 angeordnet sein oder auch in dem Kopplungselement 36 aufgenommen sein. Die zweite Welle 37 und das Federelement 40 bilden eine Teleskopwellenanordnung 41 der ersten Schwenkeinrichtung 34. Auch die optionale Hülse 39 kann Teil der Teleskopwellenanordnung 41 sein. Das Federelement 40 ist bevorzugt eine Zylinderfeder, insbesondere eine Druckfeder. Das Federelement 40 kann auch eine Gasdruckfeder sein. Die zweite Welle 37 ist in dem Federelement 40 aufgenommen. Das Federelement 40 wiederum ist in der Hülse 39 aufgenommen.

Der Sitz 14 umfasst weiterhin eine Rückenlehne 42 mit einer Rückenlehnensitzfläche 43 und einer der Rückenlehnensitzfläche 43 abgewandten zweiten Trittfläche 44. Die zweite Trittfläche 44 kann auch als obere Trittfläche bezeichnet werden. Die zweite Trittfläche 44 kann darüber hinaus auch als zweite Trittplatte, obere Trittplatte, zweites Trittblech oder oberes Trittblech bezeichnet werden. Die Rückenlehnensitzfläche 43 kann auch als Rückenlehnenpolster bezeichnet werden. Die Rückenlehnensitzfläche 43 kann beispielsweise aus Stoff, Kunstleder oder dergleichen gefertigt sein. Die Rückenlehnensitzfläche 43 kann beispielsweise mit einem Schaumstoffmaterial gepolstert sein. Alternativ kann die Rückenlehnensitzfläche 43 auch ohne eine derartige Polsterung ausgebildet sein. Beispielsweise kann die Rückenlehnensitzfläche 43 in diesem Fall eine Rückenlehnensitzschale sein, die beispielsweise aus Holz oder einem Verbundmaterial, wie beispielsweise einem faserverstärkten Kunststoffmaterial, gefertigt ist.

Die zweite Trittfläche 44 kann beispielsweise aus einem Stahlblech oder aus einem Aluminiumblech gefertigt sein. Die zweite Trittfläche 44 ist trittsicher oder rutschsicher. Beispielsweise kann die zweite Trittfläche 44 ein strukturiertes Stahlblech oder ein strukturiertes Aluminiumblech sein. Insbesondere kann die zweite Trittfläche 44 ein Riffelblech sein. Alternativ kann die zweite Trittfläche 44 auch aus einem Kunststoffmaterial oder einem Verbundmaterial, wie beispielsweise einem faserverstärkten Kunststoffmaterial, gefertigt sein. Auch in diesem Fall kann die zweite Trittfläche 44 eine Oberflächenstrukturierung aufweisen. Die zweite Trittfläche 44 spannt eine zweite Ebene E2 auf. Die zweite Ebene E2 kann auch als Haupterstreckungsebene der zweiten Trittfläche 44 bezeichnet werden.

Der Rückenlehne 42 ist eine zweite Schwenkeinrichtung 45 des Sitzes 14 zugeordnet. Die zweite Schwenkeinrichtung 45 kann auch als zweite Verschwenkeinrichtung bezeichnet werden. Die zweite Schwenkeinrichtung 45 umfasst die Lagerstellen 25 der Sitzsockelwangen 22, 23 und eine in den Lagerstellen 25 gelagerte dritte Welle 46. Die dritte Welle 46 kann in den Lagerstellen 25 drehbar gelagert sein, oder die dritte Welle 46 ist in den Lagerstellen 25 drehfest aufgenommen und die Rückenlehne 42 ist um die dritte Welle 46 drehbar. Dementsprechend können auch Wälzlager oder Gleitlager vorgesehen sein.

Insbesondere ist die Rückenlehne 42 mit Hilfe der zweiten Schwenkeinrichtung 45 um eine dritte Drehachse M3 verschwenkbar. Die dritte Drehachse M3 ist vorzugsweise parallel zu der ersten Drehachse M1 angeordnet und beabstandet von dieser positioniert. Das heißt, die dritte Drehachse M3 ist senkrecht zu der zweiten Drehachse M2 orientiert. In einer z-Richtung oder Hochrichtung z des Sitzes 14 betrachtet, ist die dritte Drehachse M3 oberhalb der Drehachsen M1, M2 positioniert. Dem Sitz 14 ist ferner noch eine x-Richtung oder Breitenrichtung x sowie eine y-Richtung oder Tiefenrichtung y zugeordnet. Die Richtungen x, y, z sind senkrecht zueinander orientiert und bilden ein Koordinatensystem des Sitzes 14. Dabei sind die Drehachsen M1, M3 parallel zu der Breitenrichtung x positioniert, und die zweite Drehachse M2 ist parallel zu der Tiefenrichtung y orientiert.

Der Rückenlehne 42 ist weiterhin eine Arretiereinrichtung 47 zugeordnet. Die Arretiereinrichtung 47 umfasst die Lagerstellen 24, 26 der Sitzsockelwangen 22, 23 und ein nicht gezeigtes Arretierelement. Vorzugsweise sind zwei Arretierelemente vorgesehen, die an einander gegenüberliegenden Seiten der Rückenlehne 42 positioniert sind. Die Arretierelemente können beispielsweise an der Rückenlehne 42 vorgesehene federvorgespannte Bolzen, insbesondere sogenannte Kugelsperrbolzen, sein, die dazu eingerichtet sind, wahlweise in die beiden Lagerstellen 24 oder in die beiden Lagerstellen 26 formschlüssig einzugreifen, insbesondere einzuschnappen oder einzurasten. Die Lagerstellen 24, 26 können dann Ausnehmungen oder Bohrungen sein. Eine formschlüssige Verbindung entsteht durch das Ineinander- oder Hintergreifen von mindestens zwei Verbindungspartnern, in diesem Fall den Arretierelementen und den Lagerstellen 24, 26. Alternativ können auch an den beiden Lagerstellen 24, 26 derartige Arretierelemente vorgesehen sein, die dazu eingerichtet sind, in entsprechende Ausnehmungen an der Rückenlehne 42 formschlüssig einzugreifen.

Der Sitz 14 umfasst weiterhin einen an der zweiten Trittfläche 44 montierten Abstützbügel 48. Der Abstützbügel 48 ist um eine vierte Drehachse M4 drehbar an der zweiten Trittfläche 44 gelagert. Rückseitig an der Rückenlehne 42, das heißt, an der zweiten Trittfläche 44, kann eine Welle 49 vorgesehen sein, mit deren Hilfe der Abstützbügel 48 um die vierte Drehachse M4 drehbar ist. Die Welle 49 kann in einem an der zweiten Trittfläche 44 vorgesehenen Lagerabschnitt 50 drehbar gelagert sein. Die vierte Drehachse M4 ist parallel zu den Drehachsen M1, M3 orientiert.

Die Funktionalität des Sitzes 14 wird nachfolgend anhand der Fig. 2 bis 7 erläutert. Wie die Fig. 2 und 3 zeigen, befindet sich das Sitzelement 28 in einer Sitzposition SP1, in der die erste Trittfläche 30 dem Sitzsockel 15 zugewandt und die Sitzfläche 29 dem Sitzsockel 15 abgewandt ist. Ebenso befindet sich die Rückenlehne 42 in einer Sitzposition SP2. In der Sitzposition SP2 der Rückenlehne 42 ist die Rückenlehne 42 beziehungsweise die Rückenlehnensitzfläche 43 relativ zu dem Sitzsockel 15 aufrecht positioniert. Insbesondere ist die Rückenlehne 42 bezüglich des Sitzsockels 15 in etwa senkrecht orientiert.

Befinden sich das Sitzelement 28 und die Rückenlehne 42 in ihren Sitzpositionen SP1, SP2, ist die zweite Trittfläche 44 in einem Neigungswinkel α relativ zu der ersten Trittfläche 30 geneigt. Der Neigungswinkel α beträgt bevorzugt 90° bis 110°, weiter bevorzugt 100° ± 5°, weiter bevorzugt 100° ± 3°, weiter bevorzugt 100° ± 1°, weiter bevorzugt genau 100°. Der Neigungswinkel α kann einstellbar sein. Sobald sich das Sitzelement 28 und die Rückenlehne 42 in ihren Sitzpositionen SP1, SP2 befinden, kann der Sitz 14 in der Art und Weise eines herkömmlichen Sitzes eingesetzt werden. Das heißt, ein Benutzer kann auf dem Sitz 14 sitzen. Wenn sich sowohl das Sitzelement 28 als auch die Rückenlehne 42 in der jeweiligen Sitzposition SP1, SP2 befindet, sind die Ebenen E1, E2 in dem Neigungswinkel α relativ zueinander geneigt. Das heißt, die Ebenen E1, E2 schneiden sich unter dem Neigungswinkel α.

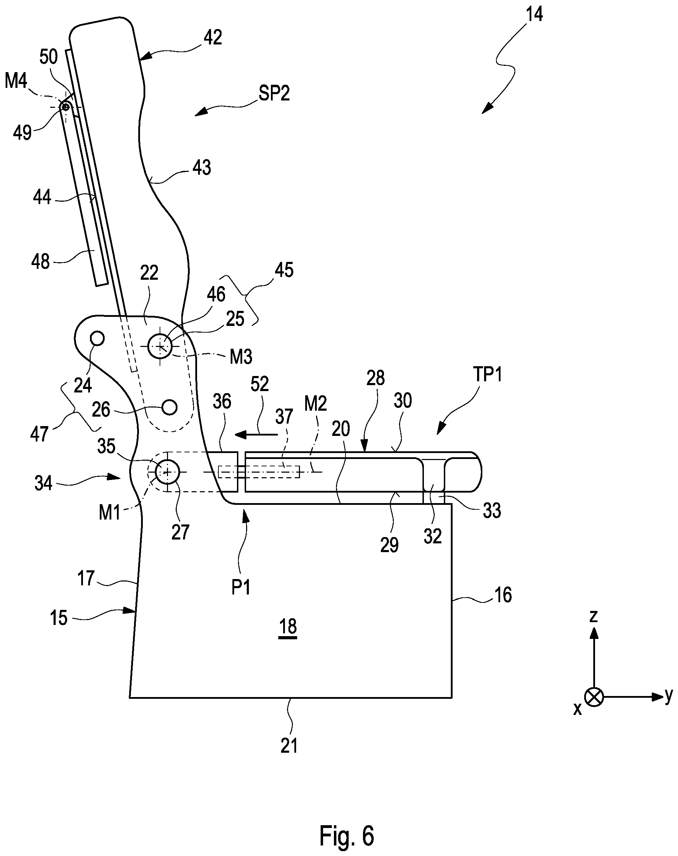

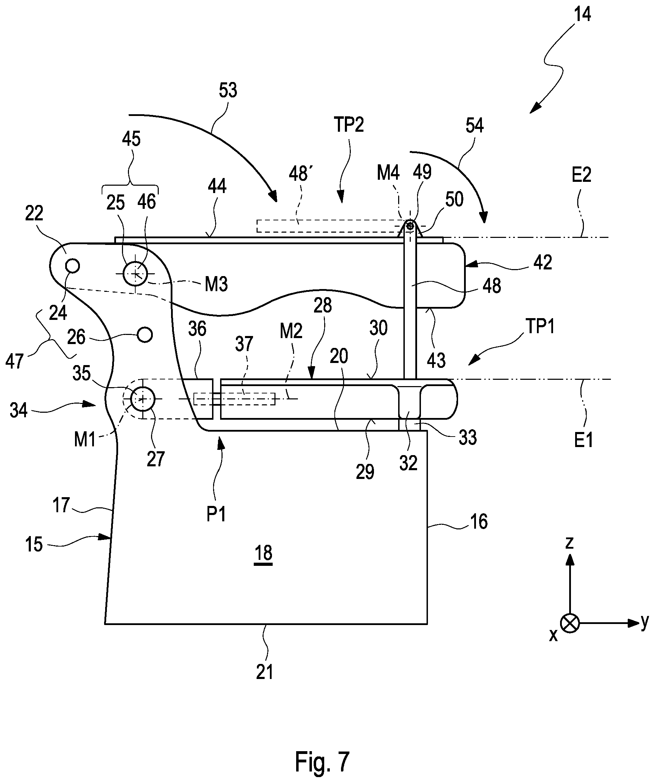

Zum Verbringen des Sitzelements 28 von der Sitzposition SP1 in eine in den Fig. 6 und 7 gezeigte erste Trittposition TP1, in der die erste Trittfläche 30 dem Sitzsockel 15 abgewandt und die Sitzfläche 29 dem Sitzsockel 15 zugewandt ist, wird zunächst, wie in der Fig. 5 gezeigt, das Sitzelement 28 von dem Sitzsockel 15 abgehoben. Hierbei wird das Sitzelement 28 mit Hilfe der ersten Schwenkeinrichtung 34 zunächst um die erste Drehachse M1 verschwenkt. Ein Verschwenkwinkel β zwischen der zweiten Drehachse M2 und einer Horizontalen H kann dabei beispielsweise etwa 45° betragen. Vor dem Verschwenken des Sitzelements 28 um die erste Drehachse M1 kann das Sitzelement 28 entriegelt werden. Hierzu kann eine Verriegelungsvorrichtung, beispielsweise in Form eines federvorgespannten Bolzens, vorgesehen sein.

Nach dem Verschwenken des Sitzelements 28 um die erste Drehachse M1 wird das Sitzelement 28 entgegen der Federvorspannung des Federelements 40 entlang der zweiten Drehachse M2 linear verlagert, um das Sitzelement 28 von der in den Fig. 2 bis 4, 6 und 7 gezeigten unverschobenen Position P1 in die in der Fig. 5 gezeigte verschobene Position P2 zu verbringen. In der verschobenen Position P2 ist das Sitzelement 28 so weit von dem Sitzsockel 15 entfernt angeordnet, dass das Sitzelement 28 um die zweite Drehachse M2 um einen Verschwenkwinkel γ von 180° (Fig. 3) verschwenkt werden kann. Die erste Trittfläche 30 ist nun dem Sitzsockel 15 abgewandt und die Sitzfläche 29 ist dem Sitzsockel zugewandt. Das heißt, das Sitzelement 28 wird um 180° verdreht. Eine Drehrichtung D des Sitzelements 28 kann dabei, wie in der Fig. 5 gezeigt, im Uhrzeigersinn oder auch entgegen dem Uhrzeigersinn orientiert sein. Das Verbringen des Sitzelements 28 von der unverschobenen Position P1 in die verschobene Position P2 ist in der Fig. 5 mit Hilfe eines Pfeils 51 angedeutet.

Anschließend wird, wie in der Fig. 6 gezeigt, das Sitzelement 28 von der verschobenen Position P2 in die unverschobene Position P1 verbracht und um die erste Drehachse M1 zurück verschwenkt, so dass die Stützabschnitte 31, 32 auf dem Sitzsockel 15 beziehungsweise auf dem Abstützelement 33 aufliegen. Die Bewegung des Sitzelements 28 von der verschobenen Position P2 in die unverschobene Position P1 ist in der Fig. 6 mit Hilfe eines Pfeils 52 angedeutet. Sobald sich das Sitzelement in der ersten Trittposition TP1 befindet, kann die erste Trittfläche 30 von dem Benutzer betreten werden. Der Sitz 14 kann nun als Stehpodest derart verwendet werden, dass der Benutzer aus der Dachluke 13 heraussehen kann und beispielsweise die auf oder an dem Dach 12 montierte Waffe bedienen kann.

Um nun die Rückenlehne 42 von ihrer Sitzposition SP2 in eine in der Fig. 7 gezeigte zweite Trittposition TP2 zu verbringen, in der die zweite Trittfläche 44 parallel zu der ersten Trittfläche 30 angeordnet ist, wird die Rückenlehne 42 zunächst mit Hilfe der Arretiereinrichtung 47 entsperrt, so dass die Rückenlehne 42 mit Hilfe der zweiten Schwenkeinrichtung 45 um die dritte Drehachse M3 in Richtung auf das Sitzelement 28 zu verschwenkbar ist. Nach dem Entriegeln der Rückenlehne 42 wird diese im Uhrzeigersinn um die dritte Drehachse M3 verschwenkt. Diese Verschwenkbewegung ist in der Fig. 7 mit Hilfe eines Pfeils 53 angedeutet. Anschließend wird die Rückenlehne 42 mit Hilfe der Arretiereinrichtung 47 in der zweiten Trittposition TP2 wieder verriegelt oder verrastet. Die zweite Trittfläche 44 kann nun ebenfalls als Stehpodest dienen. Die erste Trittfläche 30 kann dabei als Aufstiegshilfe zur zweiten Trittfläche 44 dienen. Zwischen dem Sitzelement 28 und der Rückenlehne 42 ist nun ein Freiraum oder Zwischenraum vorgesehen. Das heißt, die Rückenlehne 42 liegt nicht direkt auf dem Sitzelement 28 auf.

Der Sitz 14 kann nun als zweistufiges Stehpodest verwendet werden. Dabei ist die zweite Trittfläche 44 parallel zu der ersten Trittfläche 30 und in der Hochrichtung z beabstandet zu dieser angeordnet. Unter "parallel" kann vorliegend auch umfasst sein, dass die Trittflächen 30, 44 geringfügig zueinander geneigt sind, beispielsweise in einem Neigungswinkel von 1° bis 20°. Wenn sich sowohl das Sitzelement 28 als auch die Rückenlehne 42 in der jeweiligen Trittposition TP1, TP2 befindet, sind die Ebenen E1, E2 parallel zueinander und beabstandet voneinander angeordnet.

Zusätzlich kann noch der Abstützbügel 48 um die Welle 49 derart verschwenkt werden, dass sich der Abstützbügel 48 entweder auf der ersten Trittfläche 30 oder auf dem Sitzsockel 15 beziehungsweise auf dem Abstützelement 33 abstützt. Diese Verschwenkbewegung ist in der Fig. 7 mit Hilfe eines Pfeils 54 angedeutet. Hierdurch kann auf der zweiten Trittfläche 44 ein höheres Gewicht aufgebracht werden. In der Fig. 7 ist der Abstützbügel 48 in einer eingeklappten Position mit dem Bezugszeichen 48' und in einer ausgeklappten Position mit dem Bezugszeichen 48 versehen.

Es ist auch möglich, nur die Rückenlehne 42 zu verschwenken, so dass sich das Sitzelement 28 in seiner Sitzposition SP1 und die Rückenlehne 42 in der zweiten Trittposition TP2 befindet. In diesem Fall dient dann nur die zweite Trittfläche 44 als Standfläche oder Stehpodest.

### BEZUGSZEICHENLISTE

- 1: Nutzfahrzeug
- 2: Fahrgestell
- 3: Achse
- 4: Achse
- 5: Achse
- 6: Aufbau
- 7: Fahrerhaus
- 8: Rückseite
- 9: Vorderseite
- 10: Tür
- 11: Boden
- 12: Dach
- 13: Dachluke
- 14: Sitz
- 15: Sitzsockel
- 16: Vorderseite
- 17: Rückseite
- 18: Seite
- 19: Seite
- 20: Oberseite
- 21: Unterseite
- 22: Sitzsockelwange
- 23: Sitzsockelwange
- 24: Lagerstelle
- 25: Lagerstelle
- 26: Lagerstelle
- 27: Lagerstelle
- 28: Sitzelement
- 29: Sitzfläche
- 30: Trittfläche
- 31: Stützabschnitt
- 32: Stützabschnitt
- 33: Abstützelement
- 34: Schwenkeinrichtung
- 35: Welle
- 36: Kopplungselement
- 37: Welle
- 38: Doppelpfeil
- 39: Hülse
- 40: Federelement
- 41: Teleskopwellenanordnung
- 42: Rückenlehne
- 43: Rückenlehnensitzfläche
- 44: Trittfläche
- 45: Schwenkeinrichtung
- 46: Welle
- 47: Arretiereinrichtung
- 48: Abstützbügel
- 48': Abstützbügel
- 49: Welle
- 50: Lagerabschnitt
- 51: Pfeil
- 52: Pfeil
- 53: Pfeil
- 54: Pfeil

- D: Drehrichtung
- E1: Ebene
- E2: Ebene
- H: Horizontale
- I: Innenraum
- M1: Drehachse
- M2: Drehachse
- M3: Drehachse
- M4: Drehachse
- P1: Position
- P2: Position
- SP1: Sitzposition
- SP2: Sitzposition
- TP1: Trittposition
- TP2: Trittposition
- U: Umgebung
- x: Breitenrichtung
- y: Tiefenrichtung
- z: Hochrichtung
- α: Neigungswinkel
- β: Verschwenkwinkel
- γ: Verschwenkwinkel

## Patentansprüche

1. Sitz (14) für ein Nutzfahrzeug (1), insbesondere für ein militärisches Nutzfahrzeug, mit:
einem Sitzsockel (15),
einem Sitzelement (28), das eine Sitzfläche (29) und eine erste Trittfläche (30) aufweist,
einer ersten Schwenkeinrichtung (34) zum Verschwenken des Sitzelements (28) derart, dass das Sitzelement (28) von einer Sitzposition (SP1), in der die erste Trittfläche (30) dem Sitzsockel (15) zugewandt ist, in eine erste Trittposition (TP1), in der die erste Trittfläche (30) dem Sitzsockel (15) abgewandt ist, verschwenkbar ist,
einer Rückenlehne (42), die eine Rückenlehnensitzfläche (43) und eine zweite Trittfläche (44) aufweist, und
einer zweiten Schwenkeinrichtung (45) zum Verschwenken der Rückenlehne (42) derart, dass die Rückenlehne (42) von einer Sitzposition (SP2), in der die Rückenlehnensitzfläche (43) relativ zu dem Sitzsockel (15) aufrecht positioniert ist, in eine zweite Trittposition (TP2), in der die zweite Trittfläche (44) parallel zu der ersten Trittfläche (30) angeordnet ist, verschwenkbar ist.

2. Sitz nach Anspruch 1,
**dadurch gekennzeichnet,**
**dass** die erste Schwenkeinrichtung (34) eine erste Drehachse (M1), um die das Sitzelement (28) drehbar gelagert ist, und eine zweite Drehachse (M2), um die das Sitzelement (28) drehbar gelagert ist, aufweist, wobei die erste Drehachse (M1) senkrecht zu der zweiten Drehachse (M2) orientiert ist.

3. Sitz nach Anspruch 2,
**dadurch gekennzeichnet,**
**dass** die erste Drehachse (M1) die zweite Drehachse (M2) schneidet.

4. Sitz nach Anspruch 2 oder 3,
**dadurch gekennzeichnet,**
**dass** das Sitzelement (28) zum Verschwenken desselben von der Sitzposition (SP1) in die erste Trittposition (TP1) mit Hilfe der ersten Schwenkeinrichtung (34) zuerst um einen ersten Verschwenkwinkel (β) um die erste Drehachse (M1) verschwenkbar ist, wobei das Sitzelement (28) nach dem Verschwenken um die erste Drehachse (M1) um einen zweiten Verschwenkwinkel (γ) um die zweite Drehachse (M2) verschwenkbar ist.

5. Sitz nach Anspruch 4,
**dadurch gekennzeichnet,**
**dass** der zweite Verschwenkwinkel (γ) größer als der erste Verschwenkwinkel (β) ist.

6. Sitz nach einem der Ansprüche 2 - 5,
**dadurch gekennzeichnet,**
**dass** das Sitzelement (28) an einer Rückseite (17) des Sitzsockels (15) um die erste Drehachse (M1) drehbar gelagert ist.

7. Sitz nach einem der Ansprüche 2 - 6,
**dadurch gekennzeichnet,**
**dass** die erste Schwenkeinrichtung (34) ein Kopplungselement (36) aufweist, das um die erste Drehachse (M1) drehbar an dem Sitzsockel (15) gelagert ist, wobei das Sitzelement (28) um die zweite Drehachse (M2) drehbar an dem Kopplungselement (36) gelagert ist.

8. Sitz nach einem der Ansprüche 2 - 7,
**dadurch gekennzeichnet,**
**dass** das Sitzelement (28) entlang der zweiten Drehachse (M2) linear verschiebbar ist, um das Sitzelement (28) von einer unverschobenen Position (P1) in eine verschobene Position (P2) und umgekehrt zu verbringen.

9. Sitz nach Anspruch 8,
**dadurch gekennzeichnet,**
**dass** das Sitzelement (28) in Richtung der unverschobenen Position (P1) federvorgespannt ist.

10. Sitz nach Anspruch 8 oder 9,
**dadurch gekennzeichnet,**
**dass** die erste Schwenkeinrichtung (34) zum Verbringen des Sitzelements (28) von der unverschobenen Position (P1) in die verschobene Position (P2) und umgekehrt eine Teleskopwellenanordnung (41) mit einer Welle (37) und einem Federelement (40) aufweist.

11. Sitz nach einem der Ansprüche 2 - 10,
**dadurch gekennzeichnet,**
**dass** die zweite Schwenkeinrichtung (45) eine dritte Drehachse (M3) aufweist, um die die Rückenlehne (42) drehbar gelagert ist, wobei die dritte Drehachse (M3) parallel zu der ersten Drehachse (M1) und senkrecht zu der zweiten Drehachse (M2) orientiert ist.

12. Sitz nach einem der Ansprüche 1 - 11,
**gekennzeichnet durch**
eine Arretiereinrichtung (47) zum Arretieren der Rückenlehne (42) sowohl in der Sitzposition (SP2) als auch in der zweiten Trittposition (TP2).

13. Sitz nach einem der Ansprüche 1 - 12,
**dadurch gekennzeichnet,**
**dass** die Rückenlehne (42) einen Abstützbügel (48, 48') aufweist, der sich in der zweiten Trittposition (TP2) auf dem Sitzsockel (15) oder auf der ersten Trittfläche (30) abstützt.

14. Sitz nach einem der Ansprüche 1 - 13,
**dadurch gekennzeichnet,**
**dass** das Sitzelement (28) Stützabschnitte (31, 32) aufweist, die sich in der ersten Trittposition (TP1) auf dem Sitzsockel (15) abstützen.

15. Nutzfahrzeug, insbesondere militärisches Nutzfahrzeug, mit zumindest einem Sitz nach einem der Ansprüche 1 - 14.

## Claims

1. A seat (14) for a utility vehicle (1), in particular for a military utility vehicle, comprising:
a seat base (15),
a seat element (28) comprising a sitting surface (29) and a first stepping surface (30),
a first pivoting mechanism (34) for pivoting the seat element (28) such that the seat element (28) is pivotable from a seat position (SP1), in which the first stepping surface (30) is facing the seat base (15), into a first step position (TP1), in which the first stepping surface (30) is facing away from the seat base (15),
a backrest (42) comprising a backrest sitting surface (43) and a second stepping surface (44), and
a second pivoting mechanism (45) for pivoting the backrest (42) such that the backrest (42) is pivotable from a seat position (SP2), in which the backrest sitting surface (43) is positioned upright relative to the seat base (15), into a second step position (TP2), in which the second stepping surface (44) is arranged parallel to the first stepping surface (30).

2. The seat according to claim 1,
**characterized in that**,
the first pivoting mechanism (34) comprises a first axis of rotation (M1), about which the seat element (28) is rotatably mounted, and a second axis of rotation (M2), about which the seat element (28) is rotatably mounted, the first axis of rotation (M1) being oriented perpendicular to the second axis of rotation (M2).

3. The seat according to claim 2,
**characterized in that**,
the first axis of rotation (M1) intersects the second axis of rotation (M2).

4. The seat according to claim 2 or 3,
**characterized in that**,
the seat element (28) is first pivotable about the first axis of rotation (M1) by a first pivot angle (β) by means of the first pivoting mechanism (34) for pivoting said seat element (28) from the seat position (SP1) into the first step position (TP1), wherein, after the pivoting about the first axis of rotation (M1), the seat element (28) is pivotable about a second axis of rotation (M2) by a second pivot angle (γ).

5. The seat according to claim 4,
**characterized in that**,
the second pivot angle (γ) is larger than the first pivot angle (β).

6. The seat according to any of claims 2 to 5,
**characterized in that**,
the seat element (28) is mounted at a rear (17) of the seat base (15) as to be rotatable about the first axis of rotation (M1).

7. The seat according to any of claims 2 to 6,
**characterized in that**,
the first pivoting mechanism (34) comprises a coupling element (36) mounted on the seat base (15) as to be rotatable about the first axis of rotation (M1), wherein the seat element (28) is mounted on the coupling element (36) as to be rotatable about the second axis of rotation (M2).

8. The seat according to any of claims 2 to 7,
**characterized in that**,
the seat element (28) is linearly displaceable along the second axis of rotation (M2) for moving the seat element (28) from a non-displaced position (P1) into a displaced position (P2) and vice versa.

9. The seat according to claim 8,
**characterized in that**,
the seat element (28) is spring-biased toward the non-displaced position (P1).

10. The seat according to claim 8 or 9,
**characterized in that**,
the first pivoting mechanism (34) for moving the seat element (28) from the non-displaced position (P1) into the displaced position (P2) and vice versa comprises telescopic shaft assembly (41) having a shaft (37) and a spring element (40).

11. The seat according to any of claims 2 to 10,
**characterized in that**,
the second pivoting mechanism (45) comprises a third axis of rotation (M3), about which the backrest (42) is rotatably mounted, wherein the third axis of rotation (M3) is oriented parallel to the first axis of rotation (M1) and perpendicular to the second axis of rotation (M2).

12. The seat according to any of claims 1 to 11,
**characterized by**
a locking means (47) for locking the backrest (42) both in the seat position (SP2) as well as in the second step position (TP2).

13. The seat according to any of claims 1 to 12,
**characterized in that**,
the backrest (42) comprises a supporting bracket (48, 48') resting in the second step position (TP2) on the seat base (15) or on the first stepping surface (30).

14. The seat according to any of claims 1 to 13,
**characterized in that**,
the seat element (28) comprises support portions (31, 32) resting in the first step position (TP1) on the seat base (15).

15. A utility vehicle, in particular a military utility vehicle, comprising at least one seat according to any of claims 1 to 14.

## Revendications

1. Siège (14) pour un véhicule utilitaire (1), en particulier pour un véhicule utilitaire militaire, avec :
un socle de siège (15),
un élément de siège (28) ayant une surface de siège (29) et une première surface de marche (30),
un premier dispositif de pivotement (34) pour faire pivoter l'élément de siège (28) de telle sorte que l'élément de siège (28) puisse pivoter d'une position assise (SP1), dans laquelle la première surface de marche (30) est tournée vers le socle de siège (15), vers une première position de marche (TP1), dans laquelle la première surface de marche (30) est tournée à l'opposé du socle de siège (15),
un dossier (42) ayant une surface assise du dossier (43) et une seconde surface de marche (44), et
un second moyen de pivotement (45) pour faire pivoter le dossier (42) de telle sorte que le dossier (42) puisse pivoter d'une position assise (SP2) dans laquelle la surface assise du dossier (43) est positionnée verticalement par rapport au socle de siège (15) vers une seconde position de marche (TP2) dans laquelle la seconde surface de marche (44) est disposée parallèlement à la première surface de marche (30).

2. Siège selon la revendication 1,
**caractérisé en ce que**
le premier dispositif de pivotement (34) comprend un premier axe de rotation (M1), autour duquel l'élément de siège (28) est monté à rotation, et un second axe de rotation (M2), autour duquel l'élément de siège (28) est monté à rotation, le premier axe de rotation (M1) étant orienté perpendiculairement au second axe de rotation (M2).

3. Siège selon la revendication 2,
**caractérisé en ce que**
le premier axe de rotation (M1) croise le second axe de rotation (M2).

4. Siège selon la revendication 2 ou 3,
**caractérisé en ce que**
l'élément de siège (28) peut d'abord être pivoté autour du premier axe de rotation (M1) d'un premier angle de pivotement (β) à l'aide du premier dispositif de pivotement (34) afin de faire pivoter l'élément de siège (28) de la position assise (SP1) vers la première position de marche (TP1), l'élément de siège (28) pouvant pivoter autour du second axe de rotation (M2) d'un second angle de pivotement (γ) après le pivotement autour du premier axe de rotation (M1).

5. Siège selon la revendication 4,
**caractérisé en ce que**
le second angle de pivotement (γ) est plus grand que le premier (β).

6. Siège selon l'une des revendications 2 - 5,
**caractérisé en ce que**
l'élément de siège (28) est monté sur une face arrière (17) du socle de siège (15) de manière à pouvoir tourner autour du premier axe de rotation (M1).

7. Siège selon l'une des revendications 2 - 6,
**caractérisé en ce que**
le premier dispositif de pivotement (34) comprend un élément de couplage (36) qui est monté sur le socle de siège (15) de manière à pouvoir tourner autour du premier axe de rotation (M1), l'élément de siège (28) étant monté sur l'élément de couplage (36) de manière à pouvoir tourner autour du second axe de rotation (M2).

8. Siège selon l'une des revendications 2 - 7,
**caractérisé en ce que**
l'élément de siège (28) est déplaçable linéairement le long du second axe de rotation (M2) afin d'amener l'élément de siège (28) d'une position non déplacée (P1) à une position déplacée (P2) et vice versa.

9. Siège selon la revendication 8,
**caractérisé en ce que**
l'élément de siège (28) est sollicité par un ressort en direction de la position non déplacée (P1).

10. Siège selon la revendication 8 ou 9,
**caractérisé en ce que**
le premier dispositif de pivotement (34) pour le déplacement de l'élément de siège (28) de la position non déplacée (P1) à la position déplacée (P2) et vice versa comprend un agencement d'arbre télescopique (41) avec un arbre (37) et un élément de ressort (40).

11. Siège selon l'une des revendications 2 - 10,
**caractérisé en ce que**
le second dispositif de pivotement (45) présente un troisième axe de rotation (M3) autour duquel le dossier (42) est monté à rotation, le troisième axe de rotation (M3) étant orienté parallèlement au premier axe de rotation (M1) et perpendiculairement au second axe de rotation (M2).

12. Siège selon l'une des revendications 1 - 11,
**caractérisé par**
un dispositif de verrouillage (47) pour bloquer le dossier (42) à la fois en position assise (SP2) et en seconde position de marche (TP2).

13. Siège selon l'une des revendications 1 - 12,
**caractérisé en ce que**
le dossier (42) comporte un support d'appui (48, 48') qui s'appuie dans la seconde position de marche (TP2) sur le socle de siège (15) ou sur la première surface de marche (30).

14. Siège selon l'une des revendications 1 - 13,
**caractérisé en ce que**
l'élément de siège (28) comprend des sections de support (31, 32) qui s'appuient sur le socle de siège (15) en position de première marche (TP1).

15. Véhicule utilitaire, en particulier véhicule utilitaire militaire, avec au moins un siège selon l'une des revendications 1 à 14.
